# EUROPEAN PATENT APPLICATION

(11) **EP 0 656 586 A1**
(43) Date of publication of application: **07.06.1995**
(21) Application number: 94308415.2
(22) Date of filing: 15.11.1994
(51) Int. Cl.: G06F 9/445, G06F 13/40

(54) **Method and system for switching between a processor upgrade card and a planar processor**

(30) Priority: 01.12.1993 US 161005
(71) Applicant: International Business Machines Corporation, Armonk, N.Y. 10504 (US)
(72) Inventor: Font, Gary Paul, Boca Raton, Florida 33486 (US)
(74) Representative: Williams, Julian David

(57) **Abstract**

A personal computer system according to the present invention includes a primary system processor, a bus interface controller, a non volatile random access memory (NVRAM), and at least one I/O socket into which an alternate processor may be attached. The personal computer system is controllable exclusively by either the primary system processor or the alternate processor. A system reference diskette includes a utility for selecting either the primary system processor or the alternate processor. The bus interface controller stores information representative of the processor currently enabled. NVRAM stores information representative of the processor selected to control the personal computer system. The system reference diskette contains a Select Processor utility to select the processor to control the personal computer system and to update NVRAM to reflect the selected processor. During POST the currently enabled processor and the selected processor are compared. If different, the information in the bus interface controller is updated to reflect the selected processor.

## Description

The present invention relates to a method and system for selectively enabling either a primary processor resident on the system planar board or an alternate processor.

Personal computer systems in general and IBM personal computers in particular have attained widespread use for providing computer power to many segments of today's modern society. Personal computer systems can usually be defined as a desk top, floor standing, or portable microcomputer that consists of a system unit having a single system processor, a display monitor, a keyboard, one or more diskette drives, a fixed disk storage, and an optional printer. One of the distinguishing characteristics of these systems is the use of a motherboard or system planar to electrically connect these components together. These systems are designed primarily to give independent computing power to a single user and are inexpensively priced for purchase by individuals or small businesses. Examples of such personal computer systems are IBM's PERSONAL COMPUTER AT and IBM's PERSONAL SYSTEM/2 Models 25, 30, 40, L40SX, 50, 50Z, 55SX, 57SX, 60, 65SX, 70, 80, 90 and 95.

These systems can be classified into two general families. The first family, usually referred to as Family I Models, use a bus architecture exemplified by the IBM PERSONAL COMPUTER AT and other "IBM compatible" machines. The second family, referred to as Family II Models, use IBM's Micro Channel bus architecture exemplified by IBM's PERSONAL SYSTEM/2 Models 50 through 95. (IBM, PERSONAL COMPUTER AT, PERSONAL SYSTEM/2, PS/2 and MICRO CHANNEL are trade marks of International Business Machines Corporation, Armonk, New York.)

The Family I models typically used the popular INTEL 8088 or 8086 microprocessor as the system processor. These processors have the ability to address one megabyte of memory. Later Family I models and the Family II models typically use the higher speed INTEL 80286, 80386, and 80486 microprocessors which can operate in a real mode to emulate the slower speed INTEL 8086 microprocessor or a protected mode which extends the addressing range from 1 megabyte to 4 Gigabytes for some models. In essence, the real mode feature of the 80286, 80386, and 80486 processors provide hardware compatibility with software written for the 8086 and 8088 microprocessors.

As personal computer technology has developed and moved from eight to sixteen and eventually thirty two bit wide bus interaction and higher speed microprocessors capable of real and protected mode operation, performance capability has been sought by separating the architecture of the personal computer into varying bus areas. More specifically, in the original IBM PC, what came to be known as an expansion bus was essentially a direct extension of the microprocessor (8086 or 8088) connections, buffered and demultiplexed as required. Later, as the AT bus specification was developed and came into wide use (now being also known as the Industry Standard Architecture or ISA), it became possible to sever the nearly direct connection between the microprocessor and the bus, giving rise to the presence of what became known as the local processor bus and the renaming of the expansion bus as the input/output bus. Typically, in order to enhance performance, the local processor bus runs at a higher clock speed (typically expressed in Hertz) than does the input/output bus. The IBM AT architecture also opened the possibility of running more than one microprocessor on the input/output bus, through use of direct memory access (DMA) interrupts. Beginning with the earliest personal computer system of the Family I models, such as the IBM Personal Computer, it was recognized that software compatibility would be of utmost importance. In order to achieve this goal, an insulation layer of system resident code, also known as "firmware", was established between the hardware and software. This firmware provided an operational interface between a user's application program/operating system and the device to relieve the user of the concern about the characteristics of hardware devices. Eventually, the code developed into a BASIC input/output system (BIOS), for allowing new devices to be added to the system, while insulating the application program from the peculiarities of the hardware. The importance of BIOS was immediately evident because it freed a device driver from depending on specific device hardware characteristics while providing the device driver with an intermediate interface to the device. Since BIOS was an integral part of the system and controlled the movement of data in and out of the system processor, it was resident on the system planar and was shipped to the user in a read only memory (ROM). For example, BIOS in the original IBM Personal Computer occupied 8K of ROM resident on the planar board (motherboard).

As new models of the personal computer family were introduced, BIOS had to be updated and expanded to include new hardware and I/O devices. As could be expected, BIOS started to increase in memory size. For example, with the introduction of the IBM PERSONAL COMPUTER AT, BIOS grew to require 32K bytes of ROM.

Today, with the development of new technology, personal computer systems of the Family II models are growing even more sophisticated and are being made available to consumers more frequently. Since the technology is rapidly changing and new I/O devices are being added to the personal computer systems, modification to the BIOS had become a significant problem in the development cycle of the personal computer system. In response to these problems, it became necessary to offload portions of BIOS from ROM. This was accomplished by storing portions of BIOS on a mass storage device such as a fixed disk. In addition to storing BIOS on a mass storage device, storing of system utilities normally contained on a system reference diskette became highly desirable. The elimination of the system diskette not only reduces the price of the system, but provides a more user friendly environment.

It is appropriate at this time to briefly explain the purpose of the system utilities stored on the system reference diskette. With the introduction of IBM's PS/2 Micro Channel Systems came the removal of switches and jumpers from I/O adapter cards (associated with attachable devices) and planar. Micro Channel Architecture provided for programmable registers to replace them. Utilities to configure these programmable registers or programmable option select (POS) registers were required. U.S. Patent 5,038,320 to Heath, et. al. is for a Computer System With Automatic Initialization of Pluggable Option Cards which discloses the operation of POS registers and is hereby incorporated by reference for the purpose of providing possibly relevant background information. In addition, other utilities to improve system usability characteristics, basic device options, along with system diagnostics were shipped with each system on this system reference diskette.

Prior to initial use, each Micro Channel System required its POS registers to be initialized. For example, if the system is booted with a new device, or a I/O slot change for an existing device, a configuration error is generated and the system boot up procedure halts. The user is then prompted to load the system reference diskette. A "Set Configuration Utility" can then be booted from the system reference diskette to configure the system. The Set Configuration Utility will prompt the user for the desired action. If the appropriate device's descriptor files reside on the system reference diskette, the Set Configuration Utility will generate the correct POS or configuration data in non-volatile storage. Otherwise, the user must add the appropriate descriptor files to the system reference diskette. A "Copy An Option Diskette Utility" can be used to add the necessary descriptor files. The descriptor file contains configuration information to test the card and to interface the card to the system.

Although these procedures are fairly easy to perform, the system reference diskette must be handy or conveniently stored nearby. It has occurred, after some period of time has elapsed, that the system reference diskette and/or additional option diskettes have become misplaced or otherwise unavailable. U.S. Patents 5,128,995 and 5,214,695 to Arnold, et. al each are for an Apparatus and Method For Loading a System Reference Diskette Image From a System Partition in a Personal Computer System and are incorporated by reference for the purpose of providing possibly relevant background information. Moreover, it has occurred that the amount of storage space required for adding and storing a multiplicity of descriptor files, both for devices currently attached and not attached, exceed the capacity of the system reference diskette. Therefore it has become highly desirable to customize the system reference diskette with selected device options to improve the usability of a particular system. Moreover, it is desirable to customize the system reference diskette with selected device options to improve serviceability of a variety of systems.

As enhanced performance capability has continued to be a goal, and as faster clock speeds have become attainable for microprocessors, strategies have evolved in which it has become desirable to accommodate alternate system controllers which may, under appropriate circumstances, assume control of systems into which the controllers are inserted. For example, the provision of a processor upgrade card or board is one example of such a strategy. Heretofore, such strategies have usually contemplated the substitution of the upgraded component for the component previously used. Such substitution is acceptable where components are received in socket connectors permitting ready interchange. However, where components are soldered in place on circuit boards (as is the case with a surface mount Intel 80386SX) such substitution is less feasible or impossible. Yet other strategies have contemplated for a bus interface controller to detect the presence of an alternate processor and, in response to detection of the presence of the alternate processor, to transfer control to the alternate processor. With this latter strategy, the alternate processor may be overridden only in the event that such an alternate processor should fail after acquiring system control from the primary processor. That is, this latter strategy affords no means of selectively enabling the primary system processor while an alternate processor is installed in a socket.

Although these strategies serve to enable the alternate processor, when installed, and to transfer control to the primary processor in the event of a failed alternate processor, it may be desirable to selectively enable either the primary processor or the alternate processor without removing the alternate processor. Moreover, it is desirable to customize the system reference diskette to provide the user the capability of determining which processor is currently enabled and to offer the user the flexibility of selectively enabling either the primary or alternate processor.

In accordance with the present invention, there is now provided a computer system comprising: a primary system processor and an I/O socket to which an alternate system processor is attachable, wherein either the primary system processor or the alternate processor may be currently enabled; means for storing a procedure for enabling either the primary system processor or the alternate processor; nonvolatile memory means for storing, in memory locations thereof assigned to a selected processor, a value of either the primary system processor or the alternate processor, the value being representative of the selected processor; and means, effective if the selected processor is not the currently enabled processor, for switching control of the computer system from the currently enabled processor to the selected processor.

Viewing the present invention from another aspect, there is now provided apparatus for enabling a user of a computer system comprising a local processor bus, a primary processor coupled to the local processor bus, and a socket for attachment of an alternate processor, wherein the computer system is controllable exclusively by a single one of the primary and alternate processors at any time, when a the alternate processor is installed in the socket, to selectively enable either one of the primary and alternate processors at any time without removing the alternate processor from the socket, the apparatus comprising: a nonvolatile memory for storing information representative of a selected one of the primary and alternate processors; a bus interface controller, coupled to the local processor bus, the nonvolatile memory, the primary processor, and the socket; the bus interface controller comprising means for storing information representative of the primary or alternate processor currently enabled to control the computer system; means, controllable by a program executable on the computer system, for interrogating the nonvolatile memory and the bus interface controller to compare the information representative of a selected one of the primary and alternate processors held in the nonvolatile memory with the enabled processor identifying information stored in the bus interface controller; and means, responsive to a determination that the selected processor and currently enabled processor are different, for using the information representative of the selected processor to reconfigure the bus interface controller information and for enabling the selected one of the primary and alternate processors.

Viewing the present invention from yet another aspect, there is now provided a method for configuring a personal computer system having a primary system processor and an I/O socket to which an alternate system processor is attachable, wherein either the primary system processor or the alternate processor may be currently enabled and in which storage means on a system reference diskette stores a procedure for enabling either the primary system processor or the alternate processor, the method comprising: storing, in a bus interface controller, a value of either the primary processor or the alternate processor, the value being representative of the currently enabled processor; comparing the value associated with the selected processor with the value associated with the currently enabled processor; enabling, in dependence on the comparison that the selected processor and the currently enabled processors are different, the selected processor.

In a preferred embodiment of the present invention, there is provided a personal computer system comprising a primary system processor and a socket for attachment of an alternate processor. The computer system may be controlled exclusively by either the primary system processor or the alternate processor being currently enabled. The personal computer system also comprises a system reference diskette which contains parameter data used to configure and set up the personal computer system.

To selectively enable either one of the primary system processor or the alternate processor, without removing the alternate processor from the socket, nonvolatile memory (NVRAM) stores a value (representing the selected processor) of either the primary system processor or the alternate processor. During POST, if the selected processor is not the currently enabled processor, control is transferred from the currently enabled processor to the selected processor.

Preferred embodiments of the present invention are now be described with reference to the accompanying drawings, in which:
Fig. 1 illustrates a cut away view of a personal computer system showing a system planar board connected to a plurality of direct access storage devices; and
Fig. 2 shows a system block diagram for the personal computer system of Fig. 1.

While the present invention will be described more fully hereinafter with reference to the accompanying drawings, in which a preferred embodiment of the present invention is shown, it is to be understood at the outset of the description that follows that persons of skill in the appropriate arts may modify the invention here described while still achieving the favorable results of this invention. Accordingly, the description which follows is not to be taken in a limiting sense but is made merely for the purpose of illustrating the general principles of the invention since the scope of the invention is best defined by the appending claims.

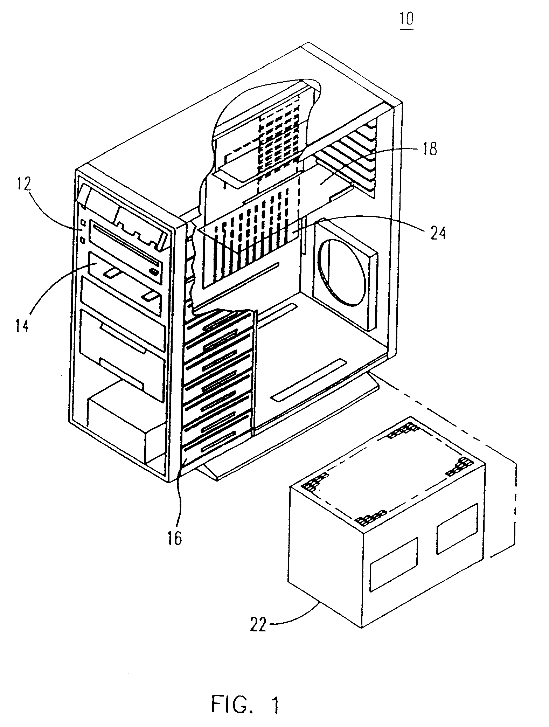

Referring now to the drawings, and in particular to Fig. 1, there is shown a cutaway version of a personal computer system 10, having a plurality of DASD (Direct Access Storage Devices) 12 - 16 connected to a system or planar board 24 through a plurality of I/O slots 18. A power supply 22 provides electrical power to the system 10 in a manner well known. The planar board 24 includes a system processor which operates under the control of computer instructions to input, process, and output information.

In use, the personal computer system 10 is designed primarily to give independent computing power to a small group of users or a single user and is inexpensively priced for purchase by individuals or small businesses. In operation, the system processor operates under an operating system, such as IBM's OS/2 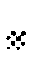 Operating System or DOS. This type of operating system includes a BIOS interface between the DASD 12 - 16 and the Operating System. A portion of BIOS divided into modules by function is stored in ROM on the planar 24 and hereinafter will be referred to as ROM-BIOS. BIOS provides an interface between the hardware and the operating system software to enable a programmer or user to program their machines without an indepth operating knowledge of a particular device. For example, a BIOS diskette module permits a programmer to program the diskette drive without an indepth knowledge of the diskette drive hardware. Thus, a number of diskette drives designed and manufactured by different companies can be used in the system. This not only lowers the cost of the system 10, but permits a user to choose from a number of diskette drives.

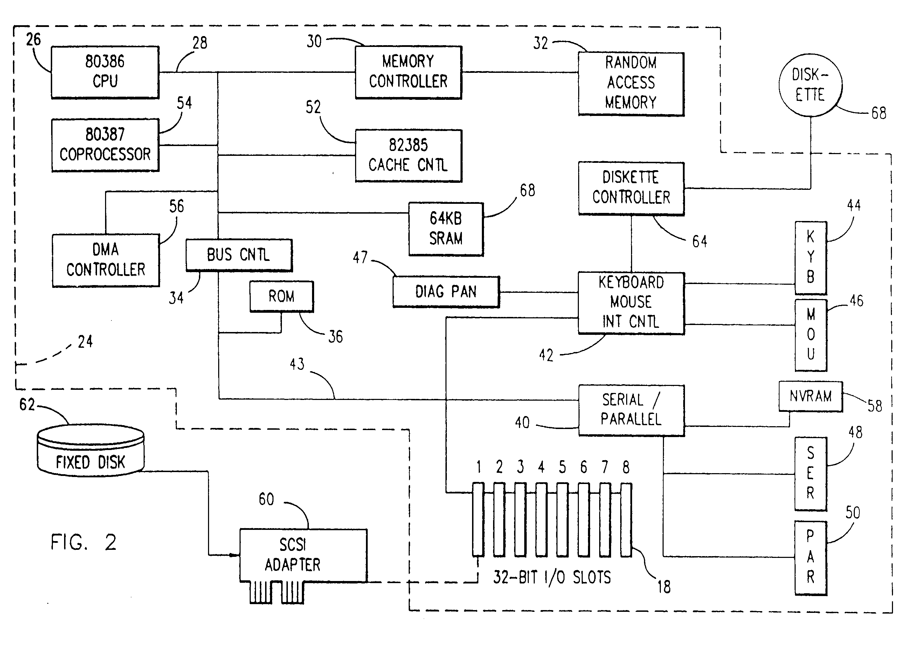

Prior to relating the above structure to the present invention, a summary of the operation in general of the personal computer system 10 may merit review. Referring to Fig. 2, there is shown a block diagram of the personal computer system 10 in accordance with the present invention, including components mounted on the planar 24 and the connection of the planar to the I/O slots and other hardware of the personal computer system. Accordingly, Fig. 2 illustrates components of the planar 24 and the connection of the planar 24 to the I/O slots 18-1 to 18-8, into which I/O options cards (not shown) may be interchangeably plugged, and other hardware of the personal computer system. These cards control various types of peripheral devices (disk drives, printers, etc.) and add-on memory which are either integrally contained on respective cards or attached thereto via external connectors.

Located on the planar 24 is the primary system processor 26 comprised of a microprocessor which is connected by a local bus 28 to a memory controller 30 which is further connected to a random access memory (RAM) 32. While any appropriate microprocessor can be used, one suitable microprocessor is the 80386 which is sold by Intel. The local bus 28 is further connected through a bus interface controller (BIC) 34 to a read only memory (ROM) 36 on the planar 24. The bus interface controller 34 serves a number of functions (some of which will be more particularly described hereinafter) and are more fully disclosed in copending, earlier filed United States Patent Applications Serial No.s 706,490; 706,534; 706,602; and 766,307 filed 28 May 1991 and owned in common with this invention. To any extent necessary or appropriate to a full understanding of this invention, those co-pending applications are hereby incorporated by reference into the present description.

While the present invention is described hereinafter with particular reference to the system block diagram of Fig. 2, it is to be understood at the outset of the description which follows, it is contemplated that the apparatus and methods in accordance with the present invention may be used with other hardware configurations of the planar board. For example, the system processor could be an Intel 80286 or 80486 microprocessor.

The bus interface controller 34 couples the CPU local bus 28 with the I/O bus 43 and functions as a protocol translator among other functions. By means of the I/O bus 43, the bus interface controller 34 is coupled with an optional feature bus such as a Micro Channel bus having a plurality of I/O slots 18-1 to 18-8 for receiving Micro Channel adapter cards, a serial/parallel interface 40, and peripheral controller 42. The I/O bus 43 includes address, data, and control components. Moreover, the I/O bus 43 may be configured to bus specifications other than the Micro Channel specification. A feature of Micro Channel is that POS registers can address I/O slots 18-1 to 18-8 by "slot address" signals on the address lines of I/O bus 43 during setup routines, and cards residing in the I/O slots can be separately addressed by "I/O address" signals on the address lines during normal program execution; where the slot addresses and I/O addresses are distinctly different values associated respectively with physical locations of the I/O slots and with the types of devices currently attached. Many different types of devices are each potentially attachable to any one of the few I/O slots of the system.

The peripheral controller 42 is further connected to a keyboard 44, mouse 46, diagnostic panel 47, and diskette controller 64. A serial/parallel interface 40 is connected to a serial port 48 and parallel port 50 to input/output information to a printer, hard copy device, etc. As is well known in the art, the local bus 28 can also be connected to a cache controller 52, a co-processor 54, and a DMA controller 56. In a preferred form of the present invention, advantage is taken of the packaging of a co-processor such as the co-processor 54 in a plastic leaded chip carrier. Tt has become conventional to provide a connector for such a device in the form of a socket which uses the two outer rows of an 11x11 pin grid array type footprint. The presence of the coprocessor 54 in Figure 2 would normally be accommodated through use of such a socket connector and possibly an intermediate adapter connector. A typical numeric coprocessor uses less than all of the one hundred twenty one possible pin connections in such a socket, typically using sixty eight. However, those connections normally include the local processor bus data signals and several control signals. Thus by bringing additional signals into the connector pin locations and packaging alternate system controllers to use all active pin locations in such a connector, all signals necessary to implementation of this invention as described hereinafter become available.

In accordance with the present invention, the personal computer in which this invention is realized has the capability of having an alternate processor directly coupled to or on the local bus 28 and effective to isolate the primary system processor (the CPU 26) when selected. The interested reader is directed to co-pending, earlier filed United States Patent Applications Serial No.s 706,425 filed 28 May 1991 and 911,440 filed 10 July 1992 and owned in common with the present subject invention for additional background information. To any extent necessary or appropriate to a full understanding of this invention, those co-pending applications are hereby incorporated by reference into the present description. A personal computer in accordance with this invention provides that local bus 28 signals be available to both the microprocessor 26 and the alternate processor, if mounted in the socket connector described above. Further, the bus interface controller 34 stores information representative of a processor currently enabled. In a preferred embodiment of the invention, port 105, bit 7 of the bus interface controller 34 stores the information representative of the currently enabled processor. When no alternate processor is attached to the local bus 28, the value in the bus interface controller 34 is that of the primary system processor 26.

A nonvolatile memory (NVRAM) 58 is connected to the microprocessor 26 through the serial/parallel port interface 40 which is further connected to bus interface controller 34. The nonvolatile memory (NVRAM) can be CMOS with battery backup to retain information whenever power is removed from the system. Since the ROM is normally resident on the planar, model and submodel values stored in ROM are used to identify the system processor and the system planar I/O configuration respectively. Thus these values will physically identify the processor and planar I/O configuration.

The NVRAM is used to store system configuration data. That is, the NVRAM will contain values which describe the present configuration of the system. For example, NVRAM contains information describing the capacity of a fixed disk or diskette 68, the type of display, the amount of memory, time, date, etc. Within the NVRAM, a separately addressable space is allocated to each I/O slot 18-1 to 18-8, for storing Programmable Option Select (POS) parameter information relative to the current configuration of the I/O slot. When the I/O slot is occupied, this parameter information includes an identity value ID, an addressing factor AD, a priority value PR, a state bit S, and other information. A register in each attached device option card (not shown) stores parameter information for controlling communications between the attached device and the processing system, including the address factor AD, the priority value PR, and the state bit S, and other information described with respect to NVRAM.

Previous to the present invention, the bus interface controller 34 would provide for detection of the presence of an alternate processor received in the connector and, in response to detection of the presence of an alternate processor, for transferring control of the local bus 28 from the primary system processor 26 to an alternate processor. According to one aspect of the present invention, NVRAM also contains information representative of a selected processor. It is understood that when referring to a "selected processor", it is meant that NVRAM stores a value representative of either the primary system processor or the alternate processor selectable by the user. Moreover, the identity of the selected processor and the currently enabled processor may not necessarily be that of the same processor. According to another aspect of the present invention, the information representing the selected processor and the information representing the currently enabled processor are compared during POST. According to still another aspect of the present invention, the system reference diskette is adapted to provide a user the ability to select either the primary system processor 26 or the alternate processor as the processor to be currently enabled . It is to be understood that, although referred to as a system reference diskette, a system reference diskette may comprise more than one diskette (such as a reference diskette and a diagnostic diskette); and although referred to as system reference diskette, a system reference diskette may comprise either a diskette or a system reference diskette image on a disk drive partition.

Programmable Option Select (POS) register information is set in the device option card register by the processing system during power-up initialization. Additionally, the model and submodel values stored in ROM are copied to NVRAM whenever special configuration utilities, such as Select Processor (as described below) and Set Configuration, are executed. The purpose of the Select Processor and Set Configuration utilities are to store values characterizing the configuration of the system in NVRAM. Thus for a system that is configured to operate under the control of a selected processor and installed adapters, information representative of the selected processor is stored in NVRAM, the model and submodel values in NVRAM will be equal respectively to the model and submodel values stored in ROM, and parameter information for each device attached to a respective I/O slot will be found in NVRAM. If the information representing the selected processor stored in NVRAM and the information representing the currently enabled processor stored in the bus interface controller 34 indicate that the selected processor and the currently enabled processor are different, the information representing the currently enabled processor in the bus interface controller 34 is changed to reflect the selected system processor as the currently enabled processor. If the model and submodel values are not equal, or if the I/O slot conditions have changed since the last power down of the processing system, the system will indicate that the configuration of the system has been modified requiring the Set Configuration utility to be run. The explanation will now proceed to the operation of the system reference diskette and to the procedure of affording a user the option of selecting either the primary system processor 26 or the alternate processor to be stored in NVRAM and subsequently loaded in the bus interface controller 34. The coding of steps as described into instructions or a program product suitable to control the system processor will be understandable to one having ordinary skill in the art of programming. In general, the system reference diskette may offer a user the following utilities: start the operating system, backup/restore system programs, update system programs, set configuration, set features, copy an option diskette, and test the computer. In a preferred embodiment of the present invention, the system reference diskette is adapted to offer the user a "select processor" utility. The select processor utility displays a menu, listing as options: 1. Processor Upgrade Option (alternate processor) and 2. System Unit Processor (primary system processor), from which the user is afforded the opportunity to select a either the alternate processor or the primary system processor. Moreover, in a preferred embodiment, the displayed menu indicates which of the processors is currently selected. Information representing the currently selected processor is stored in NVRAM and is retrieved by the Select Processor utility and displayed on the Select Processor Menu. The Select Processor utility then stores information representative of the user selected processor in NVRAM. During a subsequent POST, if the currently enabled processor and the selected processor are different, information representing the selected processor is stored in the bus interface controller 34.

Thus, there has been shown a system and method for selectively enabling either a primary system processor 26 or alternate processor by storing information representative of the selected processor in NVRAM, by storing information representative of the currently enabled processor in the bus interface controller 34, and updating the bus interface controller information during POST when the selected processor and the currently enabled processor are different. By providing this capability, either the primary system processor 26 or alternate processor may be selected by choosing a select processor utility on the system reference diskette enhancing the usability of the system.

## Claims

1. A computer system comprising:
a primary system processor and an I/O socket to which an alternate system processor is attachable, wherein either the primary system processor or the alternate processor may be currently enabled;
means for storing a procedure for enabling either the primary system processor or the alternate processor;
nonvolatile memory means for storing, in memory locations thereof assigned to a selected processor, a value of either the primary system processor or the alternate processor, the value being representative of the selected processor; and
means, effective if the selected processor is not the currently enabled processor, for switching control of the computer system from the currently enabled processor to the selected processor.

2. Apparatus for enabling a user of a computer system comprising a local processor bus, a primary processor coupled to the local processor bus, and a socket for attachment of an alternate processor, wherein the computer system is controllable exclusively by a single one of the primary and alternate processors at any time, when a said alternate processor is installed in the socket, to selectively enable either one of the primary and alternate processors at any time without removing the alternate processor from the socket, the apparatus comprising:
a nonvolatile memory for storing information representative of a selected one of the primary and alternate processors;
a bus interface controller, coupled to the local processor bus, the nonvolatile memory, the primary processor, and the socket; the bus interface controller comprising means for storing information representative of the primary or alternate processor currently enabled to control the computer system;
means, controllable by a program executable on the computer system, for interrogating the nonvolatile memory and the bus interface controller to compare the information representative of a selected one of the primary and alternate processors held in the nonvolatile memory with the enabled processor identifying information stored in the bus interface controller; and
means, responsive to a determination that the selected processor and currently enabled processor are different, for using the information representative of the selected processor to reconfigure the bus interface controller information and for enabling the selected one of the primary and alternate processors.

3. Apparatus as claimed in claim 2, comprising:
means for storing the information representative of the selected one of the primary and alternate processors in the nonvolatile memory.

4. A method for configuring a personal computer system having a primary system processor and an I/O socket to which an alternate system processor is attachable, wherein either the primary system processor or the alternate processor may be currently enabled and in which storage means stores a procedure for enabling either the primary system processor or the alternate processor, the method comprising:
storing, in a bus interface controller, a value of either the primary processor or the alternate processor, the value being representative of the currently enabled processor;
comparing the value associated with the selected processor with the value associated with the currently enabled processor;
enabling, in dependence on the comparison that the selected processor and the currently enabled processors are different, the selected processor.

5. A method as claimed in claim 4, comprising:
storing, in a nonvolatile memory, a value of either the primary processor or the alternate processor, the value being representative of the selected processor.
